# EUROPEAN PATENT SPECIFICATION

(11) **EP 4 363 219 B1**
(45) Date of publication and mention of the grant of the patent: **07.05.2025**
(21) Application number: 22783367.0
(22) Date of filing: 29.06.2022
(51) Int. Cl.: B32B 27/08, C09D 167/02, B32B 27/36

(54) **(CO)POLYESTER RESINS FOR USE AS HEAT SEAL LAYERS FOR CONTAINERS AND FILMS INCORPORATING SUCH LAYERS TO SEAL AND RESEAL CONTAINERS**
(CO)POLYESTERHARZE ZUR VERWENDUNG ALS HEISSSIEGELSCHICHTEN FÜR BEHÄLTER UND FOLIEN MIT SOLCHEN SCHICHTEN ZUM VERSIEGELN UND WIEDERVERSCHLIESSEN VON BEHÄLTERN
(CO)POLYESTER RESINS FOR USE AS HEAT SEAL LAYERS FOR CONTAINERS AND FILMS INCOPORATING SUCH LAYERS TO SEAL AND RESEAL CONTAINERS

(30) Priority: 30.06.2021 US 202163216575 P
(43) Date of publication of application: 08.05.2024
(73) Proprietor: Bostik SA, 92800 Puteaux (FR)
(72) Inventor: XU, Yuewen, Wauwatosa, Wisconsin 53226 (US); PUTHANPARAMBIL, Deepa, Wauwatosa, Wisconsin 53226 (US)
(74) Representative: Arkema Patent
(86) International application number: PCT/IB2022/000380
(87) International publication number: WO 2023/275618

(56) References cited:
- WO-A1-2018/132442
- US-A1- 2019 389 188
- US-A1- 2020 063 006
- US-B2- 9 656 447

## Description

### FIELD OF THE INVENTION

This invention relates to compositions comprising (co)polyester resins and antifog agents suitable for use as a heat seal layer for use as part of a film to be used as a flexible bag or part of a lidding laminate for a container, such as polyester trays and for use as part of a film to be used as a flexible bag or lidding laminate also having a pressure sensitive adhesive layer to allow for resealing the container. Such compositions are suitable for use as part of films to be used as flexible bags or part of a lidding laminate to seal containers for food, consumer products, and medical devices.

### BACKGROUND OF THE INVENTION

Multilayer laminates in the form of films are known to be used to seal containers, such as containers used in the food industry for packaging perishable foods, in particular fresh products. Such films may be referred to as "heat seal films," and (co)polyester resins have been known to be a constituent of such heat seal films. As used herein, the terms "heat-seal", "heat-sealing", "heat-sealable", and the like refer to a first portion of a film surface (i.e., formed from a single layer or multiple layers) which is capable of forming a fusion bond to a second portion of a film surface. A heat-seal layer is capable of fusion bonding by conventional indirect heating means which generate sufficient heat on at least one film contact surface for conduction to the contiguous film contact surface and formation of a bond interface therebetween without loss of the film integrity. It should be recognized that heat sealing can be performed by any one or more of a wide variety of manners, such as using a heat seal technique (e.g., melt-bead sealing, thermal sealing, impulse sealing, ultrasonic sealing, hot air, hot wire, infrared radiation).

It is important to ensure that a strong initial bond strength exists between the heat seal film and the container or to itself to ensure that the contents of the container (or bag) remain well-preserved. The initial force needed to separate the layers is relatively strong before the package is opened in order for the seal area also to withstand the expected abuse during the packaging operation, distribution, and storage. Moreover, the bond is considered "resealable" if the consumer may simply engage the two exposed film surfaces together-by finger pressure to cause the seal between the layers to re-establish. The means of forming peelable/resealable bonds and their use in packaging applications are disclosed in the art.

U.S. Patent No. 7,422,782 describes a multilayer film suitable for use in packaging comprising a heat sealable water insoluble polyester polymeric layer and a pressure-sensitive adhesive layer that is peelable and resealable. The multilayer film described therein may be used as a lidding laminate for a container or tray or may be used to be adhered to itself and serve as a flexible bag or pouch. The peelable/resealable bond may include both an initial first peel strength and a re-tack second peel strength. Preferably, the initial first peel strength (sometimes referred to herein as the "lockseal") may be greater than the re-tack second peel strength. It is also desirable to use the same film to reseal the container after the container is opened initially. Since these films are used in food packaging, it is desirable that the heat seal film, as well as the packaging film and tray stocks, be food contact compliant according to the applicable governmental agency, such as the Food and Drug Administration (FDA).

Such containers or trays are generally referred to as polyester containers or trays. This terminology could be used to mean a container or tray which is made entirely of polyester or is made of another material but has a polyester coating. One material often used for such containers or trays is amorphous polyethylene terephthalate (APET). Another material used for such containers or trays is crystalline polyethylene terephthalate (CPET), which may be coated with APET or recycled polyethylene terephthalate (PET). Typically, such containers have a minimum thickness of 100 µm, generally between 200 and 1000 µm. The container may be thermoformed to provide a flat bottom on which the food rests and a perimeter at the top in the form of a flat band or lip, often parallel to the bottom. Sealing between the heat seal film and the container is performed by the application of heat typically on the heat seal side, pressure, and dwell time to the film on the container, typically at the lip. Similar processes may be used to heat seal a heat seal layer to itself to serve as a bag or pouch to contain a product, such as food, consumer products, or medical devices. By "sealing to itself," one portion of the heat seal layer may be sealed to another portion of the heat seal layer.

Another important feature is that the film avoids fogging. Fogging tends to limit the visibility of the contents of the container to a consumer due to moisture condensating on the inside of the film. Also, the film is transparent or, at worst, only slightly hazy. Consumers may wish to be able to view the contents of a container clearly to assess for freshness. Antifog agents have been known to be incorporated into heat seal films for this purpose.

A number of attempts have been made to provide heat seal films for containers. U.S. Patent Application Publication No. 2013/0224411 discloses antifog films useful for packaging food, and more particularly to antifog films that can be used as lidding films in trays made of APET. The films may include at least one base layer or film, such as a polyester film, and a heat seal layer.

U.S. Patent Application Publication No. 2019/0077137 describes a coated polyester film equipped on at least one side with permanent antifog coating. The film of the invention is suitable for the production of greenhouse blinds and has specific transparency properties, permanent antifog properties, and high UV resistance.

German Patent Application No. DE 10 2009 021 713 discloses a coextruded seal and peel biaxial oriented polyester film with a base layer (B) and a heat sealable and peelable surface layer (A). The surface layer (A) contains a low sealing, peelable polymer, while the base layer (B) contains polyethylene terephthalate and polyethylene isophthalate at a chosen ratio. An antifog coating is applied to the surface layer (A).

European Patent Application No. EP 3 366 471 relates to a sealant antifog composition for polyester films comprising anionic and nonionic surfactants in a mixture of amorphous and (semi)crystalline polyesters. The invention also relates to a multi-layer film comprising a sealant layer having the above composition, to the use of such films in food packaging, and to packages obtained therefrom.

International Patent Application Publication No. WO 2018/132442 A1 provides a semicrystalline copolyester resin composition formed by twin screw extrusion of various ingredients including copolyester resins and antiblock, slip, and antifog additives. This semicrystalline copolyester resin can be extruded on to a polyethylene terephthalate (PET) film or coextruded with PET resin to form clear PET films with antifog properties. These films with antifog properties are produced in a single step without the use of solvent and do not involve any secondary step for coating a separate antifog layer. This process minimizes the cost and time required by a converter to make such clear antifog films. These films containing the heat seal copolyester resin can be heat sealed to clear APET trays. Embodiments of the resin composition disclosed therein are FDA and EU compliant for direct food contact application.

U.S. Patent Application Publication No. 2018/0215522 relates to a multilayer film comprising a layer of an extrudable hot-melt self-adhesive composition, for example based on a styrene block copolymer, a complexable thin layer consisting of a thermoplastic, and a heat-sealable and cleavable layer comprising at least 95 wt% of at least one linear copolyester resin. It also relates to a process for producing the film, which comprises co-extrusion blow-molding and to resealable packagings using as a lid the multilayer film described therein.

The prior art describes the use of (co)polyester in heat seal films. The chemistry has been widely known and used as lidstock for amorphous polyester containers or trays. The need for an improved antifog film or lidding laminate to serve as a heat seal lidding laminate for a container or as a bag remains. Also desirable is an improved antifog film or lidding laminate that has reseal functionality. In addition, it is desirable that such heat seal films are transparent, with little or no haze.

### SUMMARY OF THE INVENTION

In order to meet at least some of the needs described herein, the present invention provides a composition comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C, and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin. The composition may be used to form a heat seal layer containing an antifog agent.

According to another embodiment of the invention, a laminate in the form of a film for sealing a container or sealing to itself to form a flexible bag comprises: (a) a heat seal layer adapted to be adhered to the container and comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C , and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin; and (b) a core layer adhered to the heat seal layer.

According to another embodiment of the invention, a laminate in the form of a film for sealing a container or sealing to itself to form a flexible bag comprises: (a) a heat seal layer adapted to be adhered to the container (or itself, in the case of a bag) and comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C , and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin; (b) a pressure sensitive adhesive layer adhered to and in direct contact with the heat seal layer; and (c) a core layer adhered to the pressure sensitive adhesive layer.

According to another embodiment of the invention, a method of sealing a container comprises the steps of: (a) forming a lidding laminate comprising a core layer and a heat seal layer comprising a composition comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C , and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin, wherein the laminate optionally has a pressure sensitive adhesive layer between the core layer and the heat seal layer and in direct contact with the heat seal layer; and (b) heat sealing the laminate to the container.

According to another embodiment of the invention, a method of forming a bag comprises the steps of: (a) forming a laminate comprising a core layer and a heat seal layer comprising a composition comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C , and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin, wherein the laminate optionally has a pressure sensitive adhesive layer between the core layer and the heat seal layer and in direct contact with the heat seal layer; and (b) heat sealing the heat seal layer to itself.

According to still another embodiment of the invention, a package comprises a container and a lidding laminate comprising: (a) a heat seal layer adhered to the container and comprising a composition comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C, and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin; (b) optionally, a pressure sensitive adhesive layer adhered to the heat seal layer; and (c) a core layer adhered to the pressure sensitive adhesive layer when present or to the heat seal layer when the pressure sensitive adhesive layer is not present.

According to still another embodiment of the invention, a package comprises a flexible bag or pouch comprising: (a) a heat seal layer adhered to itself and comprising a composition comprising a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C, and most preferably between about 65°C and about 85°C; and an antifog agent, wherein the composition has a heat of fusion of greater than the heat of fusion of the (co)polyester resin and a glass transition temperature less than the glass transition temperature of the (co)polyester resin; (b) optionally, a pressure sensitive adhesive layer adhered to the heat seal layer; and (c) a core layer adhered to the pressure sensitive adhesive layer when present or to the heat seal layer when the pressure sensitive adhesive layer is not present.

### BRIEF DESCRIPTION OF THE DRAWING

The present invention may be understood more readily by reference to the attached drawing, in which:
Fig. 1A is a cross-sectional view of a package in accordance with the present invention comprising a container and a lidding laminate, without a pressure sensitive adhesive layer, in the closed or sealed position;
Fig. 1B is a cross-sectional view of the package of Fig. 1A in the opened or unsealed position;
Fig. 2A is a cross-sectional view of a package in accordance with the present invention comprising a container and a lidding laminate, with a pressure sensitive adhesive layer, in the closed or sealed position;
Fig. 2B is a cross-sectional view of the package of Fig. 2A in the opened or unsealed position; and
Fig. 3 are photographs of two exemplified heat seal layers of the present invention showing fog formation after one (1) day and four (4) weeks.

### DETAILED DESCRIPTION OF THE INVENTION

The present invention may be understood more readily by reference to the following detailed description of certain embodiments of the invention and the working examples.

The term "(co)polyester" is understood to mean a synthetic polymer prepared by the reaction of one or more difunctional carboxylic acids or esters (i.e., diacids or diesters) with one or more difunctional hydroxyl compounds (i.e., diols), and is generic to both polyesters and copolyesters. A polyester is the reaction product of one diacid or diester with one diol, whereas a copolyester is the reaction product of multiple diacids or diesters with one diol, multiple diols with one diacid or diester, or multiple diacids or diesters with multiple diols.

The term "reaction product" or residue as used herein refers to any product of an esterification or transesterification reaction of any of the monomers used in making the (co)polyester, including an oligomer or the final (co)polyester, reacted to a certain intrinsic and melt viscosities. The term "reaction product" also includes a monomer formed *in situ* by the reaction of other monomers which may become part of the (co)polyester backbone. Typically, the relative amounts of the monomer residues making up the (co)polyester product are the same as or very similar to the relative amounts of the monomers used in the charge to make the product. In some conditions, however, other monomers are formed during the production of the (co)polyester and such formed monomers may become part of the final product. When ethylene glycol is used, for example, some amount of diethylene glycol may be formed at a low level *in situ* and its residue may become part of the (co)polyester backbone, as is known in the art.

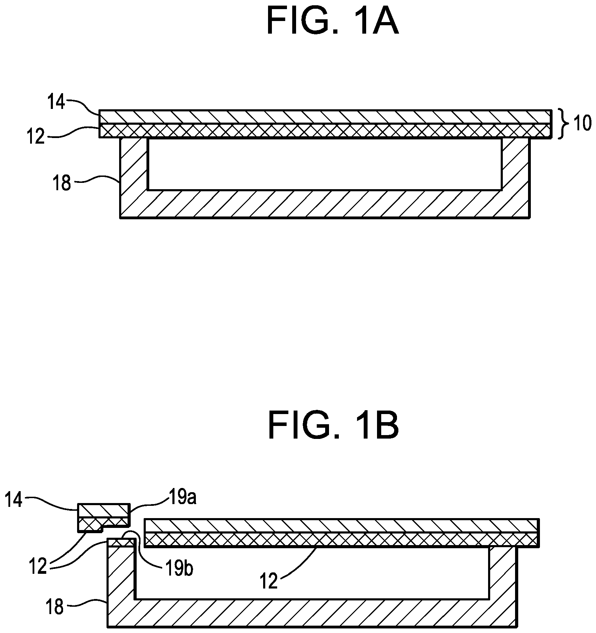

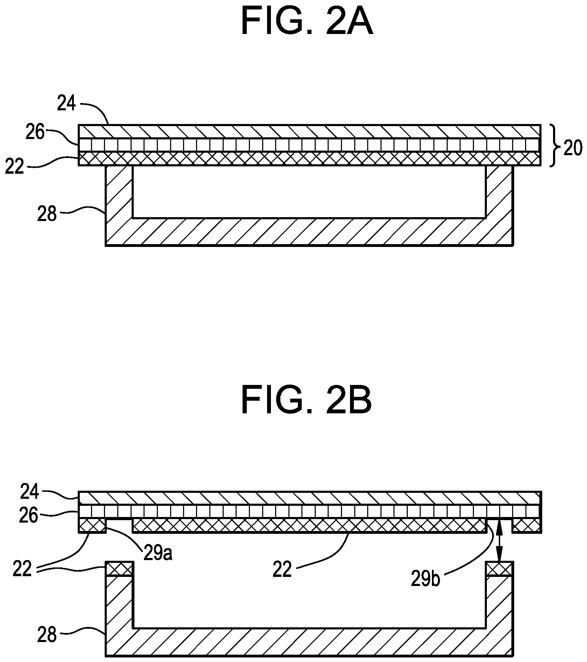

As used herein, the phrase "peel strength" refers to: (1) in embodiments in which no pressure sensitive adhesive layer is used (i.e., as shown in Figs. 1A and 1B), the cohesive strength of the heat seal layer; and (2) in embodiments in which the pressure sensitive adhesive layer is present (i.e., as shown in Figs. 2A and 2B), the bond or adhesive strength between the heat-sealable, innermost film-layer (also referred to herein as the heat seal layer) and the pressure sensitive adhesive layer in direct contact therewith. In embodiments in which the pressure sensitive adhesive layer is present, the peel strength depends primarily on the chemical similarity or dissimilarity of the materials which form the two layers in direct contact with one another. Peel strength of known materials may also be affected by production conditions, packaging machine conditions, and environmental conditions during film fabrication, the packaging process, and storage. The multilayer film according to the present invention may be heat-sealed to itself such that two portions of the innermost layer are brought into contact with each other using heat-seal jaws and by applying a pressure (force) for an appropriate time and temperature, for example a pressure of 30 psi for 1 second at a temperature of between 126-149° C. The innermost layer may then be separated or delaminated from an adjacent adhesive layer (a polymeric second layer) and the force required to separate these layers may be measured in accordance with the test method described in ASTM D903. This is referred to as the "first peel strength" or the "initial peel strength." After delamination, the separated portions of film may be manually rejoined by applying a manual force at this seal region of the film. The external innermost layer may further be re-separated or delaminated from an adjacent adhesive layer and the force required to separate these layers may be measured in accordance with the test method described in ASTM D903. This is referred to as the "re-tack peel strength."

In the embodiment described in which no pressure sensitive adhesive is present, the force required to cause the failure shown in Fig. 1B (which includes cohesive failure of the heat seal layer) may be measured in accordance with the test method described in ASTM D903.

As used herein, the phrase "peelable/resealable bond" as used herein refers to at least one bond between two adjacent film layers which is adapted to easily separate or delaminate by manually pulling apart the film, and reseal or re-adhere to itself by bringing the separated portions of film together by application of manual finger pressure.

As used herein, the phrase "innermost film layer" as applied to film layers of the present invention refers to the film layer which is closest to the product relative to the other layers of the multilayer film. An innermost film layer may serve as a food-contact layer and is referred to herein as the heat seal layer. The phrase "outermost film layer," as used herein refers to the exterior-film layer which is furthest from the product relative to the other layers of the multilayer film and is referred to herein as the core layer, which may be a single layer or be made up of sub-layers.

As used herein, the phrase "food-contact layer" as applied to film layers refers to any film layer of a multilayer film which is in direct contact with the food product packaged in the film. This is the heat seal layer as described herein.

As used herein, the phrase "pressure sensitive adhesive" refers to adhesives which are tacky upon the application of pressure without its tackiness being essentially dependent upon temperature elevation.

As used herein, the phrase "direct contact" as applied to film layers, is defined as adhesion of the subject film layer surface directly to another film layer surface (including all or substantially all the entire planar surfaces) when the laminate is sealed together.

An embodiment of the invention pertains to a composition comprising a (co)polyester resin comprising the reaction product of at least one diol and at least one diacid or diester and an antifog agent. The (co)polyester resin has a heat of fusion of 0.1 to 8 J/g, preferably 0.2 to 5 J/g, most preferably 0.5 to 3 J/g and a glass transition temperature between about 50°C and 100°C, preferably between about 60°C and about 90°C, and most preferably between about 65°C and about 85°C. The composition has a heat of fusion greater than the heat of fusion of the (co)polyester resin and a glass transition temperature less than the glass transition temperature of the (co)polyester resin. Thus, the (co)polyester resin and antifog agent are selected such that, when mixed, the mixture has a higher heat of fusion value and a lower glass transition temperature relative to those values of the (co)polyester resin alone.

Heat of fusion values provided herein are determined according to ASTM E793-01 "Standard Test Method for Enthalpies of Fusion and Crystallization by Differential Scanning Calorimetry," except with one modification to the test in that a scanning temperature of 15°C per minute instead of 10°C per minute was used. As is known in the art, heat of fusion values are obtained and reported herein as the values obtained upon the first heat of the sample. The glass transition temperature values provided herein are determined in accordance with ASTM E1356-08. As is known in the art, glass transition temperature values are obtained and reported herein as the values obtained upon the second heat of the sample. Preferably, the heat of fusion of the composition is 7.5 to 30 J/g, preferably 10 to 25 J/g, most preferably 12.5 to 20 J/g. The glass transition temperature of the composition is preferably between about 40°C and 80°C, preferably between about 45°C and about 75°C, and most preferably between about 50°C and about 70°C. In a preferred embodiment, the value of the melt peak of the (co)polyester resin is substantially the same as the value of the melt peak of the composition. As used herein, the value of the melt peak is determined by _ASTM E793-01, except with one modification to the test in that a scanning temperature of 15°C per minute instead of 10°C per minute was used. In this context of the relative melt peak values of the mixture and the (co)polyester resin alone, "substantially the same as" shall mean that the two temperatures are within 5°C, preferably 3°C, most preferably 2°C of one another.

The composition is suitable for use as a heat seal resin capable of being extruded on to PET films or coextruded with PET resins to produce a clear heat sealable laminate with anti-fogging properties. This laminate may be used for packaging fresh produce, meats, or other food products or other items that could potentially contain moisture or otherwise produce fog. This laminate may be used as a pouch or bag in which event it is sealed to itself, specifically with the heat seal layers being sealed to itself as shown, for example, in Fig. 2 of U.S. Patent No. 7,422,782. The laminate may also be used as a lidding laminate in which event it is sealed to a tray or container. The usual container for such food products is clear amorphous PET trays. The overall concept of the packaging is to help the consumer see the food in the tray or in the bag or pouch. If there are water droplets or fogging is present on the surface of the film, the overall effect of the packaging is lost and the consumer satisfaction will be impaired. Fog develops in numerous ways as a result of changing climate or variation in temperature conditions such as freezing or humidity. When warm air, which holds moisture, meets a colder surface, water can condense and settle on to the colder surface. When too much moisture settles, this leads to water accumulation that needs to go somewhere, resulting in fog. The principle behind using anti-fog heat seal resins is to create a hydrophilic surface by altering the degree of wetting on the surface of the film when the heat seal coating is formed. The antifog heat seal layer improves the wettability of the surface and, when this surface attracts and absorbs moisture, it creates a non-scattering or a thin layer of film of water without impeding vision through the layer.

The laminate of embodiments of the invention have also been found to have low haze. Having a low haze is desirable so that consumers can easily see through the laminate to view the product within the sealed container or bag. Preferably, the haze of the laminate, as determined in accordance with ASTM D1003, is less than about 5%, preferably less than about 3%, and most preferably less than about 2%.

According to an embodiment of the invention, the at least one diacid or diester is mostly, substantially all, or all aromatic. As used herein in this context, the term "mostly" means more than fifty (50) mole percent and substantially all means at least ninety-five (95) mole percent. In a preferred embodiment of the invention, the at least one diacid or diester comprises, consists essentially of, or consists of one of dimethyl terephthalate, terephthalic acid, or a blend thereof. In still another preferred embodiment, the at least one diacid or diester consists of dimethyl terephthalate, terephthalic acid, or a blend thereof, and the at least one diol consists of ethylene glycol and diethylene glycol or a blend thereof.

According to another embodiment of the invention, the (co)polyester resin comprises the reaction product of at least one diol and at least two diacids or diesters. Preferably, the at least two diacids or diesters are mostly, substantially all, or all aromatic and preferably comprise, consist essentially of, or consist of dimethyl terephthalate, terephthalic acid, isophthalic acid, dimethyl isophthalate, or blends thereof. In the embodiment in which the at least two diacids or diesters consist of dimethyl terephthalate and isophthalic acid, these monomers are preferably used in a molar ratio of greater than about 60:40, preferably between about 65:35 and about 95:5, and most preferably between about 70:30 and about 90:10.

According to another embodiment of the invention, the at least one diol is mostly, substantially all, or all aliphatic or cycloaliphatic. Preferably, the least one diol comprises, consists essentially of, or consists of ethylene glycol. In a preferred embodiment, the at least one diol consists of ethylene glycol and the at least two diacids or diesters consist of dimethyl terephthalate and isophthalic acid, preferably in in a molar ratio of greater than about 60:40, preferably between about 65:35 and about 95:5, and most preferably between about 70:30 and about 90:10.

In another embodiment of the invention, the amorphous (co)polyester resin has a Brookfield Thermosel melt viscosity at 255°C of between 100,000 and 350,000 cP, preferably between about 125,000 cP to 275,000 cP, with a #27 spindle at rotational speed between about 0.3 and 2 rpm. In yet another embodiment of the invention, the intrinsic viscosity of the (co)polyester resin is between about 0.1 dl/g to about 0.7 dl/g, preferably between about 0.45 dl/g to about 0.66 dl/g. As used herein, intrinsic viscosity is determined in accordance with ASTM D5225-14. The viscosity of the (co)polyester resin increase as the reaction progresses. The amorphous (co)polyester resin may have a melt flow index within a range of 7 to 50 g/10 min, as measured in accordance with ASTM D1238-20 at a temperature of 190°C and using a weight of 2.16 kg.

The (co)polyester used in the present invention may be produced by any conventional method for producing a (co)polyester by a transesterification method or a direct esterification method. However, in consideration of food applications, use of heavy metals or compounds that pose a problem in hygiene as catalysts and additives should be avoided or limited. The (co)polyesters used in the present invention typically can be prepared from diacids or diesters and diols which react in substantially equal proportions and are incorporated into the (co)polyester polymer as their corresponding residues. As is well-known, the diols are added in excess, because unreacted diols are more easily evaporated than unreacted diacids or diesters. The (co)polyesters of the present invention, therefore, can contain substantially equal molar proportions of diacid or diester residues and diol residues. The mole percentages provided in the present disclosure, therefore, may be based on the total moles of diacid and diester residues or the total moles of diol residues.

Suitable methods include, but are not limited to, the steps of reacting one or more dicarboxylic acids with two or more diols at a temperature of 100°C to 315°C at a pressure of 0.1 to 760 mm Hg for a time sufficient to form a polyester. U.S. Pat. No. 3,772,405 describes suitable methods of producing (co)polyesters. In one process for making the (co)polyester resin, the process comprises: (I) heating a mixture comprising the selected monomers useful in any of the (co)polyesters of the invention in the presence of a catalyst at a temperature of 150 to 255 C for a time sufficient to produce an initial polyester; (II) heating the initial polyester of step (I) at a temperature of 240 to 320° C for 1 to 4 hours; and (III) removing any unreacted glycols.

Suitable catalysts for use in this process include, but are not limited to, organozinc, titanium, or tin compounds, although organo-tin compounds are not preferred for food packaging applications. The use of this type of catalyst is well-known in the art. Examples of catalysts useful in the present invention include, but are not limited to, zinc acetate dihydrate, butyltin tris-2-ethylhexanoate, dibutyltin diacetate, titanium (IV) 2-ethylhexyloxide, titanium (IV) butoxide and/or dibutyltin oxide. Other catalysts may include, but are not limited to, those based on manganese, lithium, germanium, and cobalt. Catalyst amounts can range from 10 ppm to 20,000 ppm or 10 to 10,000 ppm, or to 5000 ppm or 10 to 1000 ppm or 10 to 500 ppm, or 10 to 300 ppm or 10 to 250 based on the catalyst metal and the weight of the final polymer. The process can be carried out in either a batch or continuous process. In embodiments of the invention, the reaction is continued until the product has a Brookfield Thermosel melt viscosity at 255°C of between 100,000 and 350,000 cP, preferably between about 125,000 cP to 275,000, with a #27 spindle at rotational speed between about 0.3 and 2 rpm. In another embodiment of the invention, the reaction is continued until the product has an intrinsic viscosity of between about 0.1 dl/g to about 0.7 dl/g, preferably between about 0.45 dl/g to about 0.66 dl/g. The reaction is stopped in a known way, for example by stopping the vacuum and heat upon obtaining a measurement of the torque on the agitator which would correspond to the desirable viscosity of the (co)polyester melt.

As mentioned above, the composition of the present invention comprises an antifog agent. The antifog agent is selected such that the composition comprising the (co)polyester resin and the antifog agent (either alone or with other additives) has a heat of fusion of greater than the heat of fusion of the (co)polyester resin and a glass transition temperature less than the glass transition temperature of the (co)polyester resin. In a preferred embodiment, the antifog agent is selected from the group consisting of a sorbitan ester, a glycerol ester, and blends thereof. Embodiments of the invention using this additive impart excellent antifog ability when the film is exposed to either hot fog or cold fog conditions, in some cases leading to instantaneous antifog performance at 3°C to 10°C. Preferably, the antifog additive, like the other constituents of the composition, are safe for food if the item to be contained is a food item. Several antifog additives provided by Croda Polymer Additives are suitable, such as Atmer^{™} 100 (a liquid sorbitan ester), Atmer^{™} 1440 (a glycerol ester liquid), and Atmer^{™} 1010 (glycerol ester paste), and Atmer^{™} 116 (ethoxylated sorbitan ester liquid), Atmer^{™} 122 (a glycerol ester microbead). Other antifog additives with similar chemistry, performance, and properties can also be used. Preferably, the antifog additive migrates to the surface of the PET film and raises the surface energy of the PET film and lowers the surface energy of the water droplets forming a continuous and uniform transparent layer of water once water condenses on the surface of the PET film. In embodiments of the invention, the antifog additive is present in an amount suitable to achieve the necessary antifog properties, without impacting the adhesive properties of the composition. In embodiments, the antifog agent is present in the composition between about 1% to about 12% by weight of the fully formulated heat seal resin composition, preferably about 2% to about 10%, and most preferably about 3% to about 7%.

Embodiments of compositions of the present invention for forming the heat seal layer may optionally contain one or more additives conventionally used in the manufacture of polymeric films. Examples of such additives are pigments, lubricants, antioxidants, free radical scavengers, UV absorbers, thermal stabilizers, anti-blocking agents, surface active agents, slip aids, optical brighteners, gloss improvers, and viscosity modifiers, among other additives.

According to an embodiment of the invention, a laminate for sealing a container (also referred to herein as a "lidding laminate") or for serving as a flexible bag comprises a heat seal layer adapted to be adhered to the container (or sealed to itself) and comprising any composition described herein; an optional pressure sensitive adhesive layer adhered to the heat seal layer; and a core layer adhered to the pressure sensitive adhesive layer when present or to the heat seal layer when the pressure sensitive adhesive layer is not present. Embodiments of the invention also include a package, such as a sealed container with the lidding laminate adhered to the container or such as a bag or pouch formed by sealing the heat seal layer of the laminate to itself. In one embodiment, the package comprises a container, such as a tray, and a laminate comprising: a heat seal layer adhered to the container and comprising any of the compositions described herein; optionally, a pressure sensitive adhesive layer adhered to and in direct contact with the heat seal layer; and a core layer adhered to the pressure sensitive adhesive layer when present or to the heat seal layer when the pressure sensitive adhesive layer is not present.

Figs. 1A and 1B show a cross-sectional view of the embodiment of the lidding laminate 10 without any pressure sensitive adhesive layer. In particular, lidding laminate 10 comprises a heat seal layer 12 and a core layer 14. Heat seal layer 12 is formed from (e.g., by being extruded from) a composition comprising any of the (co)polyester resin/antifog agent compositions described herein. In embodiments of the invention, core layer 14 itself may comprise multiple sub-layers laminated together. In a preferred embodiment, heat seal 12 layer consists of the single layer of the (co)polyester/anti-fog agent compositions described herein. The thickness of heat seal layer 12 may vary over a wide range depending on the application, and may range from 2-30 µm, preferably from 3-20 µm, and most preferably from 4-12 µm. Core layer 14 may also be a single layer or may be a multilayer film itself, such as a three-layer film of a PET sub-layer, polyurethane laminating adhesive (PU) sub-layer, and polyethylene (PE) sub-layer. Core layer 14 may also comprise a barrier or print sub-layer. Preferably, the PE sub-layer is adjacent to a tie layer, to which heat seal layer 12 is adhered. The thickness of core layer 14 may vary over a wide range depending on the application, and may range from 20-200 µm, preferably from 35-150 µm, and most preferably from 40-100 µm. Lidding laminate 10 may be formed in any way, such as by: (i) extrusion of each layer followed by lamination or (ii) coextrusion. Figs. 1A and 1B show container or tray 18, which can be any known material as described above, such as APET.

Fig. 1A shows lidding laminate 10 adhered to container 18; such adhesion may be done by heat sealing in a conventional way, which involves applying pressure to a heated lidding laminate 10 against the lip of container 18 and allowing it to cool and thereby form a bond with container 18. After peeling off lidding laminate 10 from container 18, substrate failure (or cohesive failure) occurs within both heat seal layer 12 and core layer 14, as shown in Fig. 1B. Fig. 1B shows a straight vertical cleave line 19a across both heat seal layer 12 and core layer 14 and a straight horizontal cleave line 19b across heat seal layer 12. In practice, the failure path may actually be irregular in shape, but will extend from the top of core layer 14 to the outside (left-hand side, as shown in Fig. 1B) of heat seal later 12. In this embodiment, the initial bond between heat seal layer 12 and core layer 14 is viewed as a "lockseal," and it has a peel strength (or "initial peel strength" which, because this embodiment is not resealable, is the only peel strength) of greater than 1,200 gli (6.95 N/15 mm) or about 7 N/15 mm, as measured according to ASTM D903.

Figs. 2A and 2B show a cross-sectional view of the embodiment of the invention having a pressure sensitive adhesive layer 26 as part of a lidding laminate 20, which also comprises heat seal layer 22 and core layer 24. In this embodiment, heat seal layer 22, core layer 24, and container 28 are analogous to and have the same materials and properties as heat seal layer 12, core layer 14, and container 18, respectively. In a preferred embodiment, pressure sensitive adhesive layer 26 comprises an adhesive based on styrene block copolymers (SBCs), as described in more detail below. Pressure sensitive adhesive layer 26 may be any suitable pressure sensitive adhesive layer (e.g., an SBC-based adhesive) or may itself comprise multiple sub-layers, such as a trilaminate, or two or more such multilaminates. For example, pressure sensitive adhesive layer 26 may comprise a trilaminate having a pressure sensitive adhesive sub-layer as the innermost sub-layer in direct contact with heat seal layer 22, a laminating sub-layer of low density polyethylene (LDPE) on other side of the pressure sensitive adhesive sub-layer, and a sealing layer of PET on the other side of the LDPE layer in direct contact with core layer 24. The thickness of pressure sensitive adhesive sublayer may vary over a wide range depending on the application, such as from 3-40 µm, preferably from 5-30 µm, and most preferably from 8-20 µm. In the event that the pressure sensitive adhesive layer 26 is a trilaminate with the particular pressure sensitive adhesive sublayer being one of the three layers of the trilaminate, the thickness of pressure sensitive adhesive layer 26 may range from 15-300 µm, preferably from 25-150 µm, and most preferably from 30-100 µm.

Fig. 2A shows lidding laminate 20 adhered to container 28; and such adhesion is done by heat sealing in a conventional way, which may involve applying pressure to a heated lidding laminate 20 against the lip of container 28 and allowing it to cool and thereby form a bond with container 28. After initially peeling off lidding laminate 20 from container 28, adhesive failure occurs between heat seal layer 22 and pressure sensitive adhesive layer 26, and heat seal layer 22 cleaves along cleave lines 29a and 29b, Although shown as straight vertical lines in Fig. 2B, the fault path in actuality may be irregular, but does extend throughout the entire height of heat seal layer 22 from a vertical location adjacent the tray 28 to a vertical location adjacent the interface with pressure sensitive adhesive layer 26. In this embodiment, the initial bond between heat seal layer 22 and pressure sensitive adhesive layer 26 is viewed as a lockseal, as described above, namely having an initial peel strength of greater than 1,200 gli (6.95 N/15 mm) or about 7 N/15 mm, as measured according to ASTM D903.

The embodiment of the invention shown in Figs. 2A and 2B also provides for a "reseal" function, meaning that, after the initial opening of the container from its state after being heat sealed, the pressure sensitive layer 26 can be resealed to the heat seal layer 22 with only finger pressure sufficient to re-engage the two surfaces to provide a re-tack peel strength of at least about 0.5 N/15 mm, preferably at least about 0.7 but at least about 5 N/15 mm, preferably at least about 3 N/15mm, tested after the third cycle of opening and re-sealing. Preferably, these re-tack peel strengths are achieved despite the presence of some contamination between the two layers, such as food particles or residues. It is recognized that re-tack peel strength will generally decrease with an increasing number of opening (or peeling) and re-tacking cycles Preferably, the re-tack peel strength remains at at least about 0.5 N/15 mm after 5 cycles, preferably after 7 cycles and most preferably after 10 cycles. To achieve the reseal function, lidding laminate 20 must have heat seal layer 22 placed in direct contact with pressure sensitive adhesive layer 26 (or sub-layer, in the event that layer 26 includes multiple sub-layers) to provide an interface of those two layers, which will become the point of adhesive failure after the initial peel. Stated another way, if layer 26 is comprised of multiple sub-layers, the sub-layer of layer 26 which contains the pressure sensitive adhesive must be positioned in direct contact with heat seal layer 22; in this way, the sub-layers of layer 26 which are not the layer containing the pressure sensitive adhesive (e.g., tie layers, printing layer) are positioned so as not to obstruct the heat seal/pressure sensitive layer interface that can be resealed.

**In** an embodiment of the invention, the peel strength between the container and the heat seal layer is at least about 1.1, preferably at least about 1.25, more preferably at least about 1.5, and most preferably at least 2 times stronger than the peel strength between the pressure sensitive adhesive layer and the heat seal layer. This permits the adhesive failure between the cleave lines 29a and 29b, as shown in Fig. 2A and 2B.

As described above, pressure sensitive adhesive layer 26 may be an SBC-based adhesive. Such adhesives are commercially available under the trademark M-Resin^{™} from the assignee hereof. Such adhesives are also described in U.S. Patent Application Publication No. 2018/0215522. In embodiments herein, the pressure sensitive adhesive layer comprises a hot-melt self-adhesive composition which has a melt flow index, measured in accordance with ASTM D1238-20 for a temperature of 190°C using a weight of 2.16 kg, ranging from 0.01 to 200 g/10 minutes and which comprises:
from about 40% to about 70% by weight of a styrene block copolymer comprising at least one elastomer block, said styrene block copolymer comprising:
   from about 30% to about 90% by weight of at least one diblock copolymer chosen from the group comprising SI, SBI, SIB, SB, SEB and SEP, and
   from about 10% to about 70% by weight of at least one triblock copolymer chosen from the group comprising SIS, SIBS, SBS, SEBS and SEPS;
   the total content of styrene units of said styrene block copolymer ranging from about 10% to about 40%; and
from about 30% to about 60% by weight of one or more tackifying resins having a softening temperature of between 5 and 140°C.

The pressure sensitive adhesive composition may comprise one or more styrene block copolymers, having a weight-average molar mass M_{w} of generally between 50 kDa and 500 kDa. Unless otherwise indicated, the weight-average molar masses M_{w} that are given in the present text are expressed in daltons (Da) and are determined by Gel Permeation Chromatography, the column being calibrated with polystyrene standards. These styrene block copolymers may consist of blocks of various polymerized monomers including at least one polystyrene block, and are prepared by radical-polymerization techniques. The triblock copolymers include 2 polystyrene blocks and 1 elastomer block. They can have various structures: linear, star (also called radial), branched or else comb. The diblock copolymers include one polystyrene block and one elastomer block. The triblock copolymers have the general formula: ABA (I), in which:
A represents a styrene (or polystyrene) non-elastomer block, and
B represents an elastomer block which may be:
   polyisoprene. The block copolymer then has the structure: polystyrene-polyisoprene-polystyrene and has the name: SIS;
   polyisoprene followed by a polybutadiene block. The block copolymer then has the structure: polystyrene-polyisoprene-polybutadiene-polystyrene and has the name: SIBS;
   polybutadiene. The block copolymer then has the structure:
      polystyrene-polybutadiene-polystyrene and has the name: SBS;
      totally or partially hydrogenated polybutadiene. The block copolymer then has the structure: polystyrene-poly(ethylenebutylene)-polystyrene and has the name: SEBS;
      totally or partially hydrogenated polyisoprene. The block copolymer then has the structure: polystyrene-poly(ethylenepropylene)-polystyrene and has the name: SEPS.

The diblock copolymers have the general formula: A-B (II), in which A and B are as defined previously.

When the composition comprises several triblock styrene copolymers, the latter being chosen from the group comprising SIS, SBS, SEPS, SIBS and SEBS, it is understood that triblocks can belong to just one or to several of these 5 copolymer families. The same is true for the diblock copolymers.

It is preferred to use a composition comprising a triblock copolymer and a diblock copolymer having the same elastomer block, owing in particular to the fact that such blends are commercially available. According to one particularly preferred implementation variant, the content of diblock copolymer in the composition al can range from 40% to 90%, preferably from 50% to 90%, even more preferentially from 50% to 60%. According to one particularly advantageous embodiment, the composition of the pressure sensitive adhesive consists of an SIS triblock copolymer and of an SI diblock copolymer. In this case, the total content of styrene units in the composition al preferably ranges from 10% to 20%. The triblock copolymers included in the composition al preferably have a linear structure. The styrene block copolymers comprising an elastomer block, in particular of SI and SIS type, that can be used in the composition are commercially available, often in the form of triblock/diblock blends, including:
Kraton^{®} D1113BT from the company Kraton and Quintac^{®} 3520 from the company Zeon Chemicals are examples of compositions al consisting of SIS and SI.
Kraton^{®} D1113BT is a composition of which the overall content of styrene units is 16%, and which consists of 45% of linear SIS triblock copolymer of M_{w} approximately 250 kDa, and 55% of SI diblock copolymer of M_{w} approximately 100 kDa. Quintac^{®} 3520 is a composition which consists, respectively, of 22% and of 78% of linear SIS triblock (M_{w} approximately 300 kDa) and of SI diblock (M_{w} approximately 130 kDa), and the total content of styrene units of which is 15%.

As mentioned above, the pressure sensitive adhesive composition also comprises one or more tackifying resins having a softening temperature of between 5 and 140°C. The tackifying resin(s) that can be used have weight-average molar masses M_{w} of generally between 300 and 5000 Da and are chosen in particular from:
(i) rosins of natural origin or modified rosins, such as, for example, the rosin extracted from pine gum, wood rosin extracted from tree roots and derivatives thereof which are hydrogenated, dehydrogenated, dimerized, polymerized or esterified with monoalcohols or polyols, such as glycerol;
(ii) resins obtained by hydrogenation, polymerization or copolymerization (with an aromatic hydrocarbon) of mixtures of unsaturated aliphatic hydrocarbons having approximately 5, 9 or 10 carbon atoms resulting from petroleum fractions;
(iii) terpene resins generally resulting from the polymerization of terpene hydrocarbons, such as, for example, monoterpene (or pinene), in the presence of Friedel-Crafts catalysts, which are optionally modified by the action of phenols;
(iv) copolymers based on natural terpenes, for example styrene/terpene, α-methylstyrene/terpene and vinyltoluene/terpene.

According to one preferred embodiment, use is made of resins belonging to categories (ii) or (iii) above for which mention may be made, as examples of commercially available resin, of:
(ii) Escorez^{®} 1310 LC available from Exxon Chemicals, which is a resin obtained by polymerization of a mixture of unsaturated aliphatic hydrocarbons having approximately 5 carbon atoms, and which has a softening temperature of 94° C. and a Mw of approximately 1800 Da; Escorez^{®} 5400 also from the company Exxon Chemicals, which is a resin obtained by polymerization then hydrogenation of a mixture of unsaturated aliphatic hydrocarbons having approximately 9 or 10 carbon atoms and which has a softening temperature of 100° C. and a Mw of approximately 570 Da;
(iii) Dercolyte^{®} S115 available from Dérivés Résiniques et Terpéniques (or DRT), which is a terpene resin having a softening temperature of 115° C. and a Mw of approximately 2300 Da.

According to a preferred embodiment, the pressure sensitive adhesive composition comprises:
from 40% to 70% of the composition al of styrene block copolymers; and
from 30% to 60% of at least one tackifying resin having a softening temperature of between 5 and 140° C.

According to another preferred variant, the pressure sensitive adhesive composition comprises:
from 50% to 70% of the composition of styrene block copolymers; and
from 30% to 50% of at least one tackifying resin having a softening temperature of between 5 and 140° C.

According to yet another preferred embodiment, the pressure sensitive adhesive composition further comprises one or more stabilizers (or antioxidants). These compounds are introduced in order to protect the composition against degradation resulting from a reaction with oxygen which is capable of forming from the action of heat, light, or residual catalysts on certain raw materials such as tackifying resins. These compounds can include primary antioxidants, which trap free radicals and which may be substituted phenols, such as Irganox^{®} 1010 from Ciba. The primary antioxidants can be used alone or in combination with other antioxidants, such as phosphites, for instance Irgafos^{®} 168 also from Ciba, or else with UV-stabilizers such as amines.

The pressure sensitive adhesive composition can also comprise a plasticizer, and, if present, preferably not in an amount exceeding 5%. As plasticizer, use may be made of a paraffinic and naphthenic oil (such as Primol^{®} 352 from the company ESSO) optionally comprising aromatic compounds (such as Nyflex 222B). Finally, the composition may also comprise mineral or organic fillers, pigments, or dyes.

The pressure sensitive adhesive composition can be prepared, in the form of granules or pellets having a size between 1 and 10 mm, preferably between 2 and 5 mm, by simple hot-mixing of its ingredients, between 150 and 200°C., preferably at approximately 160° C, by means of a twin-screw extruder equipped with a tool for cutting the extruded product as it leaves the die.

### EXAMPLES

The following examples demonstrate several aspects of certain preferred embodiments of the present invention, and are not to be construed as limitations thereof.

### Example 1

A copolyester heat seal coating composition, Example 1, was prepared using Vitel 1100, manufactured by Bostik, Inc., which is a semi-crystalline copolyester resin with a Tg of 74°C, a Tm of 205°C, and a heat of fusion of 1.4 J/g. The heat seal copolyester was made by combining 97% by weight of V1100 copolyester, 1.5% by weight of Atmer 1010 (a glycerol ester paste), and 1.5% by weight of Atmer 116 (a ethoxylated sorbitan ester liquid). Both Atmer products are commercially available from Croda. The components were mixed using a twin screw extruder and pelletized. The heat seal resin hence extruded was cooled using a water bath and pelletized to yield the solid pellets. The pellets were then dried and packaged to be used either for extrusion or co-extrusion process. The thickness of the heat seal layer was about 7 µm.

The physical properties of the heat seal copolyester resin Example 1 are provided in below in Table 1. All of the Examples 1-5 described herein were coextruded with M-Resin, such as MX660, M650, M651, which are styrene block copolymer-based pressure sensitive adhesives in pellet form, and LDPE as a core layer on a multi-layer blown film line. The co-extruded blown film possessed a multi-layer laminated structure with copolyester as heat seal layer having anti-fog properties, and the M-resin serves as a reclosable pressure sensitive adhesive layer. The properties of the film samples produced using the Examples 1 - 5 are provided below in Tables 2 and 3.

### Example 2

A copolyester heat seal coating composition, Example 2, was made by combining 96% by weight of Vitel 1100 copolyester, 2% by weight of Atmer 1010, and 2% by weight of Atmer 116. The components were mixed using a twin screw extruder and pelletized using Leistritz MIC 27 6L/400 equipment as described above in Example 1. The physical properties of the heat seal copolyester resin Example 2 are provided in Table 1, and the resealability and antifog properties of the film are provided below in Tables 2 and 3.

### Example 3

A copolyester heat seal coating composition, Example 3, was made by combining 95% by weight of Vitel 1100 copolyester, 2.5% by weight of Atmer 1010, and 2.5% by weight of Atmer 116. The components were mixed using a twin screw extruder and pelletized as described above in Example 1. The physical properties of the heat seal copolyester resin Example 3 are provided in Table 1 and antifog properties of the film are provided below in Table 3.

### Example 4

A copolyester heat seal coating composition, Example 4, was made by combining 94% by weight of Vitel 1100 copolyester, 3% by weight of Atmer 1010, and 3% by weight of Atmer 116. The components were mixed using a twin screw extruder and pelletized as described above in Example 1. The physical properties of the heat seal copolyester resin Example 4 are provided in Table 1.

### Example 5

A copolyester heat seal coating composition, Example 5, was made by combining 93% by weight of Vitel 1100 copolyester, 3.5% by weight of Atmer 1010, and 3.5% by weight of Atmer 116. The components were mixed using a twin screw extruder and pelletized as described above in Example 1. The physical properties of the heat seal copolyester resin Example 5 are provided in Table 1.

**Table 1 - Copolyester resin properties**

| Sample | *T*_{g}^{a} | *Heat of Fusion^{b}* | *T*ₘ^{c} | IV^{d} | MFI^{e} |
|---|---|---|---|---|---|
| Units | °C | J/g | °C | Dl/g | g/10 min (190 C, 2.16 kg) |
| Example 1 | 64.2 | 14.2 | 204.7 | 0.57 | 3.6 |
| Example 2 | 61.8 | 14.4 | 205.0 | 0.57 | 4.3 |
| Example 3 | 61.3 | 14.9 | 204.8 | 0.56 | 4.4 |
| Example 4 | 59.7 | 17.1 | 204.5 | 0.55 | 4.4 |
| Example 5 | 57.3 | 17.9 | 204.2 | 0.55 | 5.3 |

| | | | | | |
|---|---|---|---|---|---|
| a. Glass transition temperature determined by ASTM E1356-08 using DSC b. Heat of fusion determined by ASTM E-793-01 using DSC c. Melting point determined by ASTM D7138 using DSC d. Intrinsic viscosity determined by ASTM D5225-14 e. MFI determined by ASTM D1238-20 | | | | | |

**Table 2 - Properties of Examples 1 and 2 as co-extruded blown film**

| Example | Seal time (s) | Seal Temp. (°C) | Peel strength,^{a} 1st opening (N/15 mm) | Peel strength,^{a} 2nd opening (N/15 mm) | Peel strength,^{a} 3rd opening (N/15 mm) | Peel strength,^{a} 4th opening (N/15 mm) | Peel strength,^{a} 5th opening (N/15 mm) |
|---|---|---|---|---|---|---|---|
| Example 1 | 0.5 | 149 | 12.5 | 1.9 | 1.7 | 1.3 | 1.1 |
| Example 1 | 0.5 | 163 | 12.5 | 2.9 | 2.3 | 2.1 | 1.6 |
| Example 1 | 1 | 135 | 11.5 | 2.0 | 1.4 | 1.1 | 0.9 |
| Example 1 | 1 | 149 | 10.6 | 2.0 | 1.6 | 1.3 | 1.2 |
| Example 1 | 1 | 163 | 11.0 | 2.3 | 1.7 | 1.5 | 1.2 |
| Example 2 | 0.5 | 149 | 10.4 | 1.8 | 1.4 | 1.1 | 1.0 |
| Example 2 | 0.5 | 163 | 11.0 | 1.8 | 1.3 | 1.1 | 0.9 |
| Example 2 | 1 | 135 | 10.0 | 1.3 | 0.9 | 0.8 | 0.8 |
| Example 2 | 1 | 149 | 10.6 | 1.0 | 0.7 | 0.4 | 0.4 |
| Example 2 | 1 | 163 | 7.6 | 0.4 | 0.2 | 0.1 | 0.1 |

| | | | | | | | |
|---|---|---|---|---|---|---|---|
| ^{a}. Peel strength determined by ASTM D903 | | | | | | | |

**Table 3 - Film structure and antifog properties of Examples 1-3 as co-extruded blown film**

| Layer 1 | Layer 2 | Layer 3 | Thickness distribution of layer 1/2/3 (µm) | Extruder Temp. (°C) | Die Temp. (°C) | Anti-fog rating, 1 hour | Anti-fog rating, 1 day | Anti-fog rating, 1 week | Anti-fog rating, 1 month |
|---|---|---|---|---|---|---|---|---|---|
| Example 1 | MX660.F | LDPE | 7/12/31 | 200 | 200 | 4 | 4 | 4 | 4 |
| Example 2 | MX660.F | LDPE | 7/12/31 | 210 | 200 | 5 | 5 | 5 | 5 |
| Example 3 | M650.F | LDPE | 7/12/31 | 210 | 200 | 5 | 5 | 5 | 5 |

### Example 6

A copolyester heat seal coating composition, Example 6, was made by combining 97% by weight of Vitel 1100 copolyester, 1.5% by weight of Atmer 1010, and 1.5% by weight of Atmer 116. The components were mixed using a twin screw extruder and pelletized as described above. The heat seal resin hence extruded was cooled using a water bath, and pelletized to yield the solid pellets. Examples 6 - 8 were then dried and packaged to be used for cast co-extrusion as sheets with PET resins (Indorama RAMAPET N180). The co-extruded bilayer films were subsequently biaxial oriented stretched off-line or in-line at 3.2 × 3.2 stretch ratio at 95°C for 40 seconds and annealed at 200°C for 5 seconds. The sample film properties are listed in Table 4 below.

### Example 7

A copolyester heat seal coating composition, Example 7, was made by combining 96% by weight of Vitel 1100 copolyester, 2% by weight of Atmer 1010, and 2% by weight of Atmer 116. The components were mixed using a twin screw extruder and pelletized as described above. The heat seal resin hence extruded was cooled using a water bath, and pelletized to yield the solid pellets.. The copolyester was then coextruded with PET on a cast extrusion line. The co-extruded bilayer films were subsequently biaxial oriented stretched off-line or in-line at 3.2 × 3.2 stretch ratio at 95 °C for 40 seconds and annealed at 200 °C and for 5 seconds. The sample film properties were listed in Table 4.

### Example 8

A copolyester heat seal coating composition, Example 8, was made by combining 95% by weight of Vitel 1100 copolyester, 2.5% by weight of Atmer 1010, and 2.5% by weight of Atmer 116. The components were mixed using a twin screw extruder and pelletized as described above. The heat seal resin hence extruded was cooled using a water bath, and pelletized to yield the solid pellets. The copolyester was then coextruded with PET on a cast extrusion line. The co-extruded bilayer films were subsequently biaxial oriented stretched off-line or in-line at 3.2 × 3.2 stretch ratio at 95 °C for 40 seconds and annealed at 200 °C and for 5 seconds. The sample film properties were listed in Table 4.

Heat Seal Test Description: The heat seal was conducted on a Gradient heat seal tester, Model GHS-03, manufactured by Labthink International, Inc., Medford, MA. Heat seal pressure was 40 psi and the dwell time was 0.5 second (ASTM F88). The heat seals were made with heat seal coating facing the APET sheet. The APET sheet selected for this study has a thickness of 457 µm. Three sealing temperatures were selected for the current study. The temperatures for sealing were 135°C, 149°C, and 163°C. Other conditions of sealing could be used. Once sealed, the samples were conditioned at room temperature (25°C and 32% RH) for 24 hrs. The testing data at the two different seal dwell time up to five opening are reported in Table 2 as peel strengths in using Instron 5543, following ASTM D903. The testing was conducted at room temperature (25°C and 32% RH). The peel speed was 12 inches per minutes. The initial peel strength and reseal strength values are listed in Table 2.

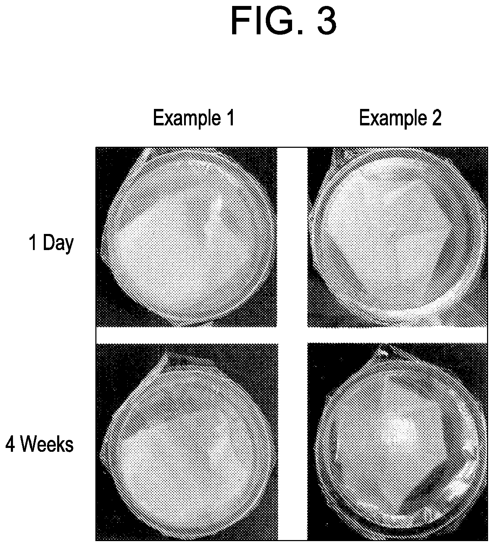

Antifog test: The antifog effectiveness of the PET film produced using the heat seal coating was assessed by the following method. Cold fog: Clear APET trays 2 inch tall were used for the testing. A white paper towel was laid in the inside of the tray and it was filled with 20 mL of distilled water at room temperature. The paper towel would hold the water and prevented the water from being spilled when the tray was sealed or moved around to be placed in the refrigerator. The lip of the tray was about ¼ inch. The APET tray was placed inside a silicone mold for proper alignment during sealing. PET film about 4 inch in diameter containing the heat seal coating was then laid face down on the tray, meaning the heat seal coating faced the inside of the tray. The PET film was then sealed to the tray using a low temperature press at 150 °C to achieve a very good seal. The pressure on the press was about 40 psi. Dwell time was 1 sec. A picture of the tray after sealing was taken to represent time zero point. See Fig. 3. The sealed tray is placed in a refrigerator at 4 °C (39 °F). The antifog property of the film is then assessed after 30 min, 1 hour, 2 hour, up to 24 hour (1 day) to 96 hours (4 days) and about 60 days. Each time, pictures were taken for comparison. Representative pictures are shown in Fig. 3 for Examples 1 and 2 tested at 1 day and 4 weeks. Hot fog: Glass jar containing 50% internal volume of water was covered with the PET film containing the heat seal antifog coating face down on top of the jar. Rubber bands were used to secure the film to the jar. The water in the jar was then warmed to 70 °C using a water bath for 2 minutes and up to 30 minutes. The antifog ability of the films were then assessed by visual inspection. The hot fog ability of the films looked very good with mostly clear medium sized drops. Example 1 in the left column of Fig. 3 shows only a few small areas of fog, and therefore received a rating of 4. The right column of Fig. 3 is clear of any fog (at least in the original samples and photographs). Therefore, these samples received a rating of 5. Any apparent haziness or fog shown in the right-hand column of Fig. 3 is caused by the conversion of the original photographs pdf. The PET film without antifog heat seal coating fogged immediately with fine foggy drops.

**Table 4 - Film structure and antifog properties of Examples 6-8 as co-extruded biaxial oriented film**

| Sample | Extrusion Temperature | Heat Seal Coating Layer Thickness | PET Layer thickness | Haze^{a} | Anti-fog rating, 1 hour | Anti-fog rating, 1 day | Anti-fog rating, 1 week | Anti-fog rating, 1 month |
|---|---|---|---|---|---|---|---|---|
| Units | °C | µm | µm | % | | | | |
| Sample 6 | 210 | 8 | 51 | 0.49 | 5 | 5 | 5 | 5 |
| Sample 7 | 210 | 8 | 59 | 0.84 | 5 | 5 | 5 | 5 |
| Sample 8 | 210 | 7 | 50 | 1.99 | 5 | 5 | 5 | 5 |

| | | | | | | | | |
|---|---|---|---|---|---|---|---|---|
| ^{a} Haze determined by ASTM D1003 | | | | | | | | |

The anti-fog scores were rated as follows: Anti-fog score 1-very poor: opaque layer of small fog droplets; score 2-poor: opaque or transparent layer of large droplets; score 3-acceptable: complete layer of large transparent droplets; score 4-good: randomly distributed or large transparent droplets; score 5-excellent: transparent film without visible water. The films of Examples 6-8 demonstrated very low haze values. As can be seen in Fig. 3, Examples 1 and 2 demonstrated low haze and little fogging.

## Claims

1. A composition comprising:
a (co)polyester resin comprising the reaction product of at least one diol and at least one diacid or diester and having a heat of fusion of 0.1 to 8 J/g, preferably 0.2 to 5 J/g, most preferably 0.5 to 3 J/g and a glass transition temperature between about 50°C and 100°C, preferably between about 60°C and about 90°C, and most preferably between about 65°C and about 85°C; and
an antifog agent;
wherein the composition has a heat of fusion of greater than the heat of fusion of the (co)polyester resin and a glass transition temperature less than the glass transition temperature of the (co)polyester resin, wherein the heat of fusion is the value upon the first heat, determined according to ASTM E793-01, except that the scanning temperature is 15°C per minute instead of 10°C per minute, and the glass transition temperature is the value upon the second heat of the sample, determined according to ASTM E1356-08.

2. The composition of claim 1, wherein the heat of fusion of the composition is 7.5 to 30
J/g, preferably 10 to 25 J/g, most preferably 12.5 to 20 J/g, wherein the heat of fusion is the value upon the first heat, determined according to ASTM E793-01, except that the scanning temperature is 15°C per minute instead of 10°C per minute.

3. The composition of claim 1, wherein the glass transition temperature of the
composition is between about 40°C and 80°C, preferably between about 45°C and
about 75°C, and most preferably between about 50°C and about 70°C, wherein the glass transition temperature is the value upon the second heat of the sample, determined according to ASTM E1356-08.

4. The composition of claim 1, wherein the value of the melt peak of the (co)polyester resin is substantially the same as the value of the melt peak of the composition, wherein the melt peak is determined according to ASTM E793-01.

5. The composition of claim 1, wherein the at least one diacid or diester is mostly, substantially all, or all aromatic, and preferably is dimethylterephthalate, terephthalic acid, or blends thereof.

6. The composition of claim 1, wherein the at least two diacids or diesters are mostly, substantially all, or all aromatic and preferably comprise, consist essentially of, or consist of dimethyl terephthalate and isophthalic acid.

7. The composition of claim 6, wherein the at least two diacids or diesters consist of dimethyl terephthalate and isophthalic acid in a molar ratio of greater than 60:40, preferably between about 65:35 and about 95:5, and most preferably between about 70:30 and about 90:10.

8. The composition of claim 1, wherein the at least one diol is mostly, substantially all, or all aliphatic or cycloaliphatic and preferably comprises, consists essentially of, or consists of ethylene glycol.

9. The composition of claim 1, wherein the antifog agent is selected from the group consisting of a sorbitan ester, a glycerol ester, and blends thereof.

10. A laminate comprising:
a heat seal layer comprising the composition of claim 1;
optionally, a pressure sensitive adhesive layer adhered to and in direct contact with the heat seal layer; and
a core layer adhered to the pressure sensitive adhesive layer when present or to the heat seal layer when the pressure sensitive adhesive layer is not present.

11. The laminate of claim 10, wherein the pressure sensitive adhesive layer is present and comprises a hot-melt self-adhesive composition which has a melt flow index, measured for a temperature of 190°C using a weight of 2.16 kg, ranging from 0.01 to 200 g/10 minutes and which comprises:
from about 40% to about 70% by weight of a styrene block copolymer comprising at least one elastomer block, said styrene block copolymer comprising:
from about 30% to about 90% by weight of at least one diblock copolymer chosen from the group comprising SI, SBI, SIB, SB, SEB and SEP, and
from about 10% to about 70% by weight of at least one triblock copolymer chosen from the group comprising SIS, SIBS, SBS, SEBS and SEPS;
the total content of styrene units of said styrene block copolymer ranging from about 10% to about 40%; and
from about 30% to about 60% by weight of one or more tackifying resins having a softening temperature of between 5 and 140°C.

12. A method of sealing a container comprising the steps of:
forming a laminate comprising a core layer and a heat seal layer comprising the composition of claim 1; and
heat sealing the laminate to the container.

13. A method of forming a bag comprising the steps of:
forming a laminate comprising a core layer and a heat seal layer comprising the composition of claim 1; and
heat sealing the heat seal layer to itself.

14. A package comprising a container; and
a lidding laminate comprising:
a heat seal layer adhered to the container and comprising the composition of claim 1;
optionally, a pressure sensitive adhesive layer adhered to and in direct contact with the heat seal layer; and
a core layer adhered to the pressure sensitive adhesive layer when present or to the heat seal layer when the pressure sensitive adhesive layer is not present.

15. The package of claim 14,
, wherein the pressure sensitive adhesive layer is present and
the laminate has a reseal peel strength re-tack peel strength of at least about 0.5 N/15 mm, preferably at least about 0.7 but at most about 5 N/15 mm, preferably at most about 3 N/15mm, tested after the third cycle of opening and re-sealing, and measured in accordance with the test method described in ASTM D903.

## Patentansprüche

1. Zusammensetzung umfassend:
ein (Co)polyesterharz umfassend das Reaktionsprodukt von wenigstens einem Diol und wenigstens einem/einer Disäure oder Diester und mit einer Schmelzwärme von 0,1 bis 8 J/g, vorzugsweise 0,2 bis 5 J/g, höchst bevorzugt 0,5 bis 3 J/g, und einer Glasübergangstemperatur zwischen etwa 50 °C und 100 °C, vorzugsweise zwischen etwa 60 °C und etwa 90 °C und höchst bevorzugt zwischen etwa 65 °C und etwa 85 °C; und
ein Antibeschlagmittel;
wobei die Zusammensetzung eine Schmelzwärme von größer als die Schmelzwärme des (Co)polyesterharzes und eine Glasübergangstemperatur von kleiner als die Glasübergangstemperatur des (Co)polyesterharzes aufweist, wobei die Schmelzwärme der Wert bei dem ersten Erhitzen ist, bestimmt gemäß ASTM E793-01, mit der Ausnahme, dass die Temperaturabtastung 15 °C pro Minute anstelle von 10 °C pro Minute beträgt, und die Glasübergangstemperatur der Wert bei dem zweiten Erhitzen der Probe ist, bestimmt gemäß ASTM E1356-08.

2. Zusammensetzung nach Anspruch 1, wobei die Schmelzwärme der Zusammensetzung 7,5 bis 30 J/g, vorzugsweise 10 bis 25 J/g, höchst bevorzugt 12,5 bis 20 J/g, beträgt, wobei die Schmelzwärme der Wert bei dem ersten Erhitzen ist, bestimmt gemäß ASTM E793-01, mit der Ausnahme, dass die Temperaturabtastung 15 °C pro Minute anstelle von 10 °C pro Minute beträgt.

3. Zusammensetzung nach Anspruch 1, wobei die Glasübergangstemperatur der Zusammensetzung zwischen etwa 40 °C und 80 °C, vorzugsweise zwischen etwa 45 °C und etwa 75 °C und höchst bevorzugt zwischen etwa 50 °C und etwa 70 °C beträgt, wobei die Glasübergangstemperatur der Wert bei dem zweiten Erhitzen der Probe ist, bestimmt gemäß ASTM E1356-08.

4. Zusammensetzung nach Anspruch 1, wobei der Wert des Schmelzpeaks des (Co)polyesterharzes im Wesentlichen gleich dem Wert des Schmelzpeaks der Zusammensetzung ist, wobei der Schmelzpeak gemäß ASTM E793-01 bestimmt wird.

5. Zusammensetzung nach Anspruch 1, wobei die/der wenigstens eine Disäure oder Diester hauptsächlich, im Wesentlichen vollständig oder vollständig aromatisch ist und vorzugsweise Dimethylterephthalat, Terephthalsäure oder ein Gemisch davon ist.

6. Zusammensetzung nach Anspruch 1, wobei die wenigstens zwei Disäuren oder Diester hauptsächlich, im Wesentlichen vollständig oder vollständig aromatisch sind und vorzugsweise Dimethylterephthalat und Isophthalsäure umfassen, im Wesentlichen daraus bestehen oder daraus bestehen.

7. Zusammensetzung nach Anspruch 6, wobei die wenigstens zwei Disäuren oder Diester aus Dimethylterephthalat und Isophthalsäure in einem Molverhältnis von größer als 60:40, vorzugsweise zwischen etwa 65:35 und etwa 95:5 und höchst bevorzugt zwischen etwa 70:30 und etwa 90:10 bestehen.

8. Zusammensetzung nach Anspruch 1, wobei das wenigstens eine Diol hauptsächlich, im Wesentlichen vollständig oder vollständig aliphatisch oder cycloaliphatisch ist und vorzugsweise Ethylenglycol umfasst, im Wesentlichen daraus besteht oder daraus besteht.

9. Zusammensetzung nach Anspruch 1, wobei das Antibeschlagmittel ausgewählt ist aus der Gruppe bestehend aus einem Sorbitanester, einem Glycerolester und Gemischen davon.

10. Laminat umfassend:
eine Heißsiegelschicht umfassend die Zusammensetzung nach Anspruch 1;
gegebenenfalls eine Haftkleberschicht, die an und in direktem Kontakt mit der Heißsiegelschicht haftet; und
eine Kernschicht, die an der Haftkleberschicht haftet, wenn diese vorhanden ist, oder an der Heißsiegelschicht, wenn die Haftkleberschicht nicht vorhanden ist.

11. Laminat nach Anspruch 10, wobei die Haftkleberschicht vorhanden ist und eine Hotmelt-Selbstkleberzusammensetzung umfasst, die einen Schmelzflussindex, gemessen für eine Temperatur von 190 °C unter Verwendung eines Gewichts von 2,16 kg, in dem Bereich von 0,01 bis 200 g/10 Minuten aufweist und die umfasst:
von etwa 40 Gew.-% bis etwa 70 Gew.-% an einem Styrol-Blockcopolymer umfassend wenigstens einen Elastomerblock, wobei das Styrol-Blockcopolymer umfasst:
von etwa 30 Gew.-% bis etwa 90 Gew.-% an wenigstens einem Diblockcopolymer ausgewählt aus der Gruppe umfassend SI, SBI, SIB, SB, SEB und SEP, und
von etwa 10 Gew.-% bis etwa 70 Gew.-% an wenigstens einem Triblockcopolymer ausgewählt aus der Gruppe umfassend SIS, SIBS, SBS, SEBS und SEPS;
wobei der Gesamtgehalt an Styroleinheiten des Styrol-Blockcopolymers in dem Bereich von etwa 10 % bis etwa 40 % liegt; und
von etwa 30 Gew.-% bis etwa 60 Gew.-% an einem oder mehreren klebrigmachenden Harzen mit einer Erweichungstemperatur zwischen 5 und 140 °C.

12. Verfahren zum Versiegeln eines Behälters, umfassend die Schritte:
Bilden eines Laminats, das eine Kernschicht und eine Heißsiegelschicht umfassend die Zusammensetzung nach Anspruch 1 umfasst; und
Heißsiegeln des Laminats an den Behälter.

13. Verfahren zur Herstellung eines Beutels, umfassend die Schritte:
Bilden eines Laminats, das eine Kernschicht und eine Heißsiegelschicht umfassend die Zusammensetzung nach Anspruch 1 umfasst; und
Heißsiegeln der Heißsiegelschicht an sich selbst.

14. Verpackung umfassend einen Behälter; und
ein Deckellaminat umfassend:
eine Heißsiegelschicht, die an dem Behälter haftet und die Zusammensetzung nach Anspruch 1 umfasst;
gegebenenfalls eine Haftkleberschicht, die an und in direktem Kontakt mit der Heißsiegelschicht haftet; und
eine Kernschicht, die an der Haftkleberschicht haftet, wenn diese vorhanden ist, oder an der Heißsiegelschicht, wenn die Haftkleberschicht nicht vorhanden ist.

15. Verpackung nach Anspruch 14, wobei die Haftkleberschicht vorhanden ist und das Laminat eine Wiederversiegelungsabziehfestigkeit-Wiederklebeabziehfestigkeit von wenigstens etwa 0,5 N/15 mm, vorzugsweise wenigstens etwa 0,7, aber höchstens etwa 5 N/15 mm, vorzugsweise höchstens etwa 3 N/15 mm, aufweist, geprüft nach dem dritten Zyklus von Öffnen und Wiederversiegeln und gemessen gemäß dem in ASTM D903 beschriebenen Prüfverfahren.

## Revendications

1. Composition comprenant :
une résine de (co)polyester comprenant le produit de réaction d'au moins un diol et d'au moins un diacide ou diester et ayant une chaleur de fusion de 0,1 à 8 J/g, de préférence de 0,2 à 5 J/g, le plus préférablement de 0,5 à 3 J/g et une température de transition vitreuse comprise entre environ 50 °C et 100 °C, de préférence entre environ 60 °C et environ 90 °C, et le plus préférablement entre environ 65 °C et environ 85 °C ; et
un agent antibuée ;
dans laquelle la composition a une chaleur de fusion supérieure à la chaleur de fusion de la résine de (co)polyester et une température de transition vitreuse inférieure à la température de transition vitreuse de la résine de (co)polyester, dans laquelle la chaleur de fusion est la valeur lors de la première chaleur, déterminée selon la norme ASTM E793-01, sauf que la température de balayage est de 15 °C par minute au lieu de 10 °C par minute, et la température de transition vitreuse est la valeur lors de la deuxième chaleur de l'échantillon, déterminée selon la norme ASTM E1356-08.

2. Composition selon la revendication 1, dans laquelle la chaleur de fusion de la composition est de 7,5 à 30 J/g, de préférence de 10 à 25 J/g, de manière particulièrement préférée de 12,5 à 20 J/g, dans laquelle la chaleur de fusion est la valeur lors de la première chaleur, déterminée selon la norme ASTM E793-01, sauf que la température de balayage est de 15 °C par minute au lieu de 10 °C par minute.

3. Composition selon la revendication 1, dans laquelle la température de transition vitreuse de la composition est comprise entre environ 40 °C et 80 °C, de préférence entre environ 45 °C et environ 75 °C, et le plus préférablement entre environ 50 °C et environ 70 °C, dans laquelle la température de transition vitreuse est la valeur lors de la deuxième chaleur de l'échantillon, déterminée selon la norme ASTM E1356-08.

4. Composition selon la revendication 1, dans laquelle la valeur du pic de fusion de la résine de (co)polyester est sensiblement la même que la valeur du pic de fusion de la composition, dans laquelle le pic de fusion est déterminé selon la norme ASTM E793-01.

5. Composition selon la revendication 1, dans laquelle l'au moins un diacide ou diester est/sont principalement, sensiblement tous, ou tous aromatique(e), et est/sont de préférence le téréphtalate de diméthyle, l'acide téréphtalique ou des mélanges de ceux-ci.

6. Composition selon la revendication 1, dans laquelle les au moins deux diacides ou diesters sont principalement, sensiblement tous ou tous aromatiques et de préférence comprennent, sont constitués essentiellement par, ou sont constitués par, le téréphtalate de diméthyle et l'acide isophtalique.

7. Composition selon la revendication 6, dans laquelle les au moins deux diacides ou diesters sont constitués de téréphtalate de diméthyle et d'acide isophtalique en un rapport molaire supérieur à 60:40, de préférence compris entre environ 65:35 et environ 95:5, et le plus préférablement entre environ 70:30 et environ 90:10.

8. Composition selon la revendication 1, dans laquelle l'au moins un diol est/sont principalement, substantiellement tous, ou tous aliphatique(s) ou cycloaliphatique(s) et de préférence comprend/comprennent, est/sont constitué(s) essentiellement par, ou est/sont constitué(s) par l'éthylène glycol.

9. Composition selon la revendication 1, dans laquelle l'agent antibuée est choisi dans le groupe constitué par un ester de sorbitane, un ester de glycérol et leurs mélanges.

10. Stratifié comprenant :
une couche de thermoscellage comprenant la composition selon la revendication 1 ;
éventuellement, une couche d'adhésif sensible à la pression collée à la couche de thermoscellage et en contact direct avec celle-ci ; et
une couche centrale collée à la couche d'adhésif sensible à la pression lorsqu'elle est présente ou à la couche de thermoscellage lorsque la couche d'adhésif sensible à la pression n'est pas présente.

11. Stratifié selon la revendication 10, dans lequel la couche d'adhésif sensible à la pression est présente et comprend une composition auto-adhésive thermofusible qui a un indice de fluidité à chaud, mesuré pour une température de 190 °C en utilisant un poids de 2,16 kg, allant de 0,01 à 200 g/10 minutes et qui comprend :
d'environ 40 % à environ 70 % en poids d'un copolymère séquencé de styrène comprenant au moins un bloc élastomère, ledit copolymère séquencé de styrène comprenant :
d'environ 30 % à environ 90 % en poids d'au moins un copolymère diséquencé choisi dans le groupe comprenant SI, SBI, SIB, SB, SEB et SEP, et
d'environ 10 % à environ 70 % en poids d'au moins un copolymère triséquencé choisi dans le groupe comprenant SIS, SIBS, SBS, SEBS et SEPS ;
la teneur totale en motifs styréniques dudit copolymère séquencé de styrène étant dans la plage d'environ 10 % à environ 40 % ; et
d'environ 30 % à environ 60 % en poids d'une ou plusieurs résines tackifiantes ayant une température de ramollissement comprise entre 5 et 140 °C.

12. Procédé de scellement d'un récipient comprenant les étapes de :
formation d'un stratifié comprenant une couche centrale et une couche de thermoscellage comprenant la composition selon la revendication 1 ; et
thermoscellage du stratifié au récipient.

13. Procédé de formation d'un sac comprenant les étapes de :
formation d'un stratifié comprenant une couche centrale et une couche de thermoscellage comprenant la composition selon la revendication 1 ; et
thermoscellage de la couche de thermoscellage sur elle-même.

14. Emballage comprenant un récipient ; et
un stratifié de couvercle comprenant :
une couche de thermoscellage collée au récipient et comprenant la composition selon la revendication 1 ;
éventuellement, une couche d'adhésif sensible à la pression collée à la couche de thermoscellage et en contact direct avec celle-ci ; et
une couche centrale collée à la couche d'adhésif sensible à la pression lorsqu'elle est présente ou à la couche de thermoscellage lorsque la couche d'adhésif sensible à la pression n'est pas présente.

15. Emballage selon la revendication 14, dans lequel la couche d'adhésif sensible à la pression est présente et le stratifié a une résistance au pelage de rescellage résistance au pelage de re-collement d'au moins environ 0,5 N/15 mm, de préférence d'au moins environ 0,7 mais d'au plus environ 5 N/15 mm, de préférence d'au plus environ 3 N/15 mm, testée après le troisième cycle d'ouverture et de re-scellage, et mesurée conformément au procédé de test décrit dans la norme ASTM D903.
